# EUROPEAN PATENT APPLICATION

(11) **EP 4 768 139 A1**
(43) Date of publication of application: **01.07.2026**
(21) Application number: 25841477.0
(22) Date of filing: 16.06.2025
(51) Int. Cl.: B05C 5/02, H01M 4/04

(54) **SLOT DIE COATING DEVICE**

(30) Priority: 16.07.2024 KR 20240093638
(71) Applicant: LG ENERGY SOLUTION, LTD., Seoul 07335 (KR)
(72) Inventor: BAK, So Yeong, 34122 Seoul (KR)
(74) Representative: Plasseraud IP
(86) International application number: PCT/KR2025/008225
(87) International publication number: WO 2026/019080

(57) **Abstract**

One embodiment of the present disclosure provides a slot die coating device that discharges a slurry onto a current collector to form a coating layer, the device comprising: a slot die unit that includes a first die block and a second die block located on the first die block, and includes a flow path through which a slurry having flowed between the first die block and the second die block flows; and a loading amount adjustment unit that is located on at least one of the first die block and the second die block, and adjusts the width of the flow path, wherein the loading amount adjustment unit comprises: a shape change unit that faces the flow path, a pressing unit that adjusts a pressure applied to the shape change unit to change the shape of the shape change unit, and a connecting unit that connects the pressing unit and the shape change unit.

## Description

### TECHNICAL FIELD

### Cross-Reference to Related Application(s)

This application claims priority to and the benefit of Korean Patent Application no. 10- 2024-0093638, filed on July 16, 2024, the disclosure of which is hereby incorporated by reference in its entirety

The present disclosure relates to a slot die coating device, and more particularly, to a slot die coating device capable of locally adjusting the discharge amount of an active material slurry coated onto a substrate.

### BACKGROUND

Along with the technology development and increased demand for mobile devices, demand for secondary batteries as energy sources has been increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

A secondary battery includes an electrode assembly having a structure in which a positive electrode, a negative electrode, and a separator interposed between the positive electrode and the negative electrode are stacked, and is manufactured by a method of dispersing an active material, a conductive material, and/or a binder, etc. in a solvent to form a slurry, and then directly coating the slurry onto a current collector, or a method of coating the slurry onto a separate support, and then laminating a film peeled from the support on a current collector.

Meanwhile, in order to attain uniform charge-discharge characteristics of the secondary battery, it is necessary to uniformly coat the positive electrode slurry and negative electrode slurry onto the current collector, and for this purpose, a coating process using a slot die device is typically performed.

A slot die coating device is a device for forming a material layer by coating a coating liquid onto a substrate at a certain width, and generally, the coating liquid refers to a substance having fluidity such as a solution or slurry formed by dissolving a material layer-forming composition in a solvent or dispersion medium.

The slot die coating device has a structure in which a slurry, which is a coating liquid, is discharged through a gap at the tip end of the slot die, as if ink flows out of a tip end of a pen point in a fountain pen. In order to coat the slurry onto the current collector using the slot die coating device, either the slot die coating device itself moves, or the current collector, which is a substrate, moves.

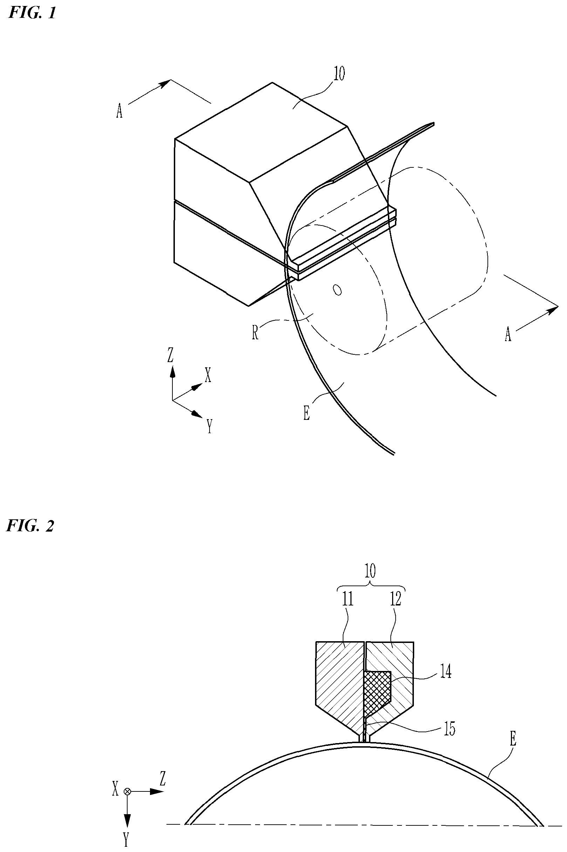

FIG. 1 is a perspective view of a conventional slot die coating device, and FIG. 2 is a cross-sectional view of the slot die coating device of FIG. 1, taken along the line A-A.

Referring to FIGS. 1 and 2, a typical coating process may be performed by coating slurry discharged from one end of a slot die coating device 10, onto a current collector E that is moved by a coating roll R.

The slot die coating device 10 includes a first die 11 and a second die 12 that face each other, a manifold part 14 that is formed in the first die 11 or the second die 12 to receive a slurry, and a land part 15 from which a slurry distributed from the manifold part 14 is discharged. Here, the land part 15 includes a peripheral region of the die lip, and specifically, may mean a slit region formed between two dies 11, 12 that face each other. The slurry is discharged through the land part 15 to form a coating bead between the die lip and the current collector (substrate), which is then coated onto the current collector, thereby forming a coating layer.

On the other hand, in the coating process, the slurry is coated onto the current collector E from the dies 11, 12, wherein in order to minimize the thickness deviation of the coated slurry, i.e., the coating layer, it is important to form a uniform flow in the width direction (x-axis direction) of the dies 11, 12. For this purpose, the pressure and flow rate formed in the manifold and die lip must be kept constant in the width direction, and therefore, the factors affecting the uniformity of the coating include not only the structure that disperses the slurry through the shape of the manifold part 14 and the like inside the dies 11, 12, but also various factors such as the speed of movement of the slurry or current collector E affecting the formation of the coating bead, the interval between the current collector E and the slot die coating device, the structure of the die lip and the slit interval between the die lips, the physical properties of the slurry such as viscosity, surface tension and fusion force with the current collector E, and the peripheral environments (temperature, etc.).

The aforementioned factors organically affect the thickness of the coating layer, and therefore, in order to obtain appropriate coating conditions whenever the coating liquid is changed, it may be necessary to newly design the slot dies 11, 12, or adjust the interval between the current collector and the slot die coating device 10, the structure of the die lips, the slit interval between die lips, and the like.

In particular, the structure of the die lip and the slit interval between the die lips, i.e., the height of the land part 15, are closely related to the flow rate of the slurry being discharged. Therefore, if the height of the land part 15 is not properly adjusted, the discharge speed of the slurry in the width direction may become uneven, which may cause a phenomenon in which slurry surges up in a specific region.

In order to optimize the coating process, it is necessary to move the first die 11 or second die 12 or deform their shape to thereby change the height of the land part 15 and adjust the flow rate of the slurry, which not only requires significant time but also involves high production costs. Conventionally, methods had been devised to partially deform the dies 11, 12 or partially deform the die lips of the dies 11, 12 in order to adjust the slurry flow rate relatively easily without moving or deforming the dies 11, 12. During this process, however, a physical force was applied to the dies 11, 12, which may cause plastic deformation of the die or make it difficult to control the local loading amount.

If the uniformity of the coating layer is not ensured, the production yield of the electrode sheet that forms the electrode assembly may decrease, and the charge-discharge characteristics of the battery, which is a final product, may deteriorate. Therefore, there is a need to develop a slot die coating device having improved structure that can solve these problems.

### DETAILED DESCRIPTION OF THE INVENTION

### Technical Problem

It is an object of the present disclosure to provide a slot die coating device that can adjust the discharge amount of slurry by increasing or decreasing a gap of the land part, thereby improving the loading deviation in the width direction.

The objects of the present disclosure are not limited to the aforementioned objects, and other objects not described herein should be clearly understood by those skilled in the art from the following detailed description and the accompanying drawings.

### Technical Solution

According to an aspect of the present disclosure, there is provided a slot die coating device that discharges a slurry onto a current collector to form a coating layer, the device comprising: a slot die unit that includes a first die block and a second die block located on the first die block, and includes a flow path through which a slurry having flowed between the first die block and the second die block flows; and a loading amount adjustment unit that is located on at least one of the first die block and the second die block, and adjusts the width of the flow path, wherein the loading amount adjustment unit comprises: a shape change unit that faces the flow path, a pressing unit that adjusts a pressure applied to the shape change unit to change the shape of the shape change unit, and a connecting unit that connects the pressing unit and the shape change unit.

The shape change unit may be made of a rubber material.

At least one pressure sensor may be attached to the shape change unit.

The pressing unit is a pneumatic control device that provides air pressure to the shape change unit, and the shape of the shape change unit may change into a concave or convex shape in accordance with the magnitude of the air pressure.

The pressing unit is a contact-type control device that provides physical pressure to the shape change unit as a bar member connected to an electric motor moves in an up-and-down direction, and the degree of convexity of the shape change unit changes in accordance with the magnitude of the physical pressure.

The loading amount adjustment unit penetrates at least one of the first die block and the second die block, and the space between the loading amount adjustment unit and the first die block, and between the loading amount adjustment unit and the second die block may be sealed.

The loading amount adjustment unit may be formed on one surface of the second die block that faces the first die block.

The loading amount adjustment unit comprises a first loading amount adjustment unit and a second loading amount adjustment unit, the first loading amount adjustment unit and the second loading amount adjustment unit are aligned along a width direction of the current collector, and the first loading amount adjustment unit and the second loading amount adjustment unit can operate independently from each other.

The slot die coating device further comprises a land part that is formed between the first die block and the second die block facing each other, and discharges the slurry having flowed into the flow path in a direction toward the current collector, wherein the loading amount adjustment unit may be formed at a position facing at least one of the upper and lower parts of the land part.

The slot die coating device may further comprise a discharge port formed at one end of the slot die unit, through which a slurry flowing in the land part is discharged to the outside.

The slot die coating device further comprises a manifold part that is formed in at least one of the first die block and the second die block and receives a slurry, wherein the manifold part may be located in front of the loading amount adjustment unit on the basis of the flow direction of the slurry.

The manifold part may be formed on one surface of the second die block that faces the first die block, and the manifold part may be concavely formed from one surface of the second die block in a direction away from the first die block.

In the loading amount adjustment unit, the connecting unit further comprises at least one groove on the outer surface that abuts against the shape change unit, the shape change unit further comprises at least one protrusion on the inner surface that abuts against the connecting unit, and the at least one groove and the at least one protrusion may be fitted to each other.

In the loading amount adjustment unit, the outer diameter of one end of the connecting unit may be smaller by the magnitude equal to or greater than the thickness of the shape change unit compared to the outer diameters of the central part and the other end of the connecting unit.

The connecting unit comprises a connecting central part, a connecting auxiliary part coupled to an outer surface of the connecting central part, and a connecting bolt part that couples the connecting central part and the connecting auxiliary part to each other, the connecting auxiliary part extends along an outer surface of the shape change unit disposed at one end of the connecting central part, and the connecting bolt part may couple the connecting central part and the connecting auxiliary part to each other by bolting.

### Advantageous Effects

A slot die coating device according to specific embodiments of the present disclosure can easily adjust the discharge amount of a slurry by increasing or decreasing a gap of the land part according to the shape change of the shape change unit facing the flow path of the slurry, thereby improving the loading deviation in the width direction, further enhancing the process capability, and producing an electrode with superior performance.

The effects of the present disclosure are not limited to the effects mentioned above, and additional other effects not described above will be clearly understood from the detailed description and the accompanying drawings by those skilled in the art.

### BRIEF DESCRIPTION OF THE DRAWINGS

FIG. 1 is a perspective view of a conventional slot die coating device.
FIG. 2 is a cross-sectional view of the slot die coating device of FIG. 1, taken along the line A-A.
FIG. 3 is a cross-sectional view of the slot die coating device according to one embodiment of the present disclosure.
FIG. 4 is a cross-sectional view of a loading amount adjustment unit included in the slot die coating device of FIG. 3.
FIGS. 5 and 6 are cross-sectional views of the slot die coating device of FIG. 3 taken along the a-a' axis, which illustrates a loading adjustment method of the loading amount adjustment unit.
FIGS. 7 and 8 are cross-sectional views of a slot die coating device according to another embodiment of the present disclosure taken along the same axis as FIGS. 5 and 6, which illustrates a loading adjustment method of the loading amount adjustment unit.
FIG. 9 is a cross-sectional view of a slot die coating device according to another embodiment of the present disclosure.
FIG. 10 is a cross-sectional view of a loading amount adjustment unit included in the slot die coating device of FIG. 9.
FIGS. 11 and 12 are cross-sectional views of the slot die coating device of FIG. 9 taken along the b-b' axis, which illustrates the loading adjustment method of the loading amount adjustment unit.
FIG. 13 is a cross-sectional view of the loading amount adjustment unit included in the slot die coating device according to another embodiment of the present disclosure.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Throughout the descriptions herein, when a certain part "includes" a component, this does not indicate that the certain part excludes other components, but indicates that the part may further include other components, unless otherwise defined.

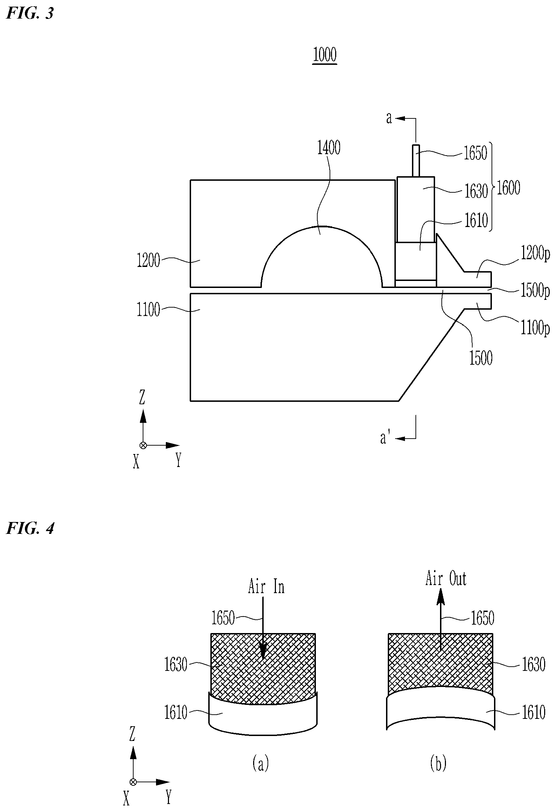

FIG. 3 is a cross-sectional view of the slot die coating device according to one embodiment of the present disclosure. FIG. 4 is a cross-sectional view of a loading amount adjustment unit included in the slot die coating device of FIG. 3.

Referring to FIGS. 1 and 3, a slot die coating device 1000 according to one embodiment of the present disclosure is a slot die coating device 1000 that discharges a slurry onto a current collector E to form a coating layer, the device comprising: slot die units 1100, 1200 that include a first die block 1100 and a second die block 1200 located on the first die block 1100, and includes a flow path through which a slurry having flowed between the first die block 1100 and the second die block 1200 flows; and a loading amount adjustment unit 1600 that is located on at least one of the first die block 1100 and the second die block 1200 and adjusts the width of the flow path.

The first die block 1100 and the second die block 1200 included in the slot die units 1100, 1200 may be configured to receive supply of slurry and discharge the slurry to the outside. One surface of the first die block 1100 and one surface of the second die block 1200 are arranged so as to face each other, and one surface of the first die block 1100 and the second die block 1200 facing each other may be parallel to the discharge direction (x-axis direction) of the slurry. Here, the first die block 1100 and the second die block 1200 may be referred to as the upper die and lower die, or the lower die and upper die, depending on their positions.

Meanwhile, for convenience of explanation, the following description will be given on the assumption that the number of die blocks included in the slot die units 1100, 1200 is two. However, the number is not limited thereto, and the number of die blocks included in the slot die units 1100, 1200 may be two or more. For example, when the number of die blocks is three, slurry may be simultaneously supplied between the dies facing each other, whereby two coating layers may be laminated on the current collector.

In addition, the slot die coating device 1000 according to the present embodiment may further include a land part 1500 that is formed between the first die block 1100 and the second die block 1200 facing each other, and discharges the slurry having flowed into the flow path in a direction toward the current collector E.

The land part 1500 may be a portion that discharges the slurry having flowed between the first die block 1100 and the second die block 1200 to the outside of the slot die units 1100, 1200.

The land part 1500 may be a section through which a slurry having flowed between the first die block 1100 and the second die block 1200 passes to flow out to the outside. That is, the land part 1500 may provide a moving passage of the slurry. The land part 1500 may be formed by coupling the first die block 1100 and the second die block 1200. The land part 1500 may refer to a space separated between the coupled first die block 1100 and second die block 1200.

As an example, the space of the land part 1500 may be in the form of a generally flat rectangle, and its width (+/- x-axis direction) may be extended long along a width direction of the slot die units 1100, 1200. Here, the width direction of the slot die units 1100, 1200 may be the same direction as the width direction of the current collector E. In addition, the width of the land part 1500 may be substantially equal to or larger than the width of the coating layer to be produced.

The height (+/- z-axis direction) of the land part 1500 may correspond to the separation distance between the two dies 110, 120, and the length (+/- y-axis direction) of the land part 1500 may be parallel to the discharge direction of the slurry.

Here, the height of the land part 1500 may also be referred to as a gap of the land part. As described below, the loading amount adjustment unit 1600 can adjust the discharge amount of slurry by increasing or decreasing the height of the land part 1500, i.e., the gap of the land part.

The slot die coating device 1000 according to the present embodiment may further include a discharge port 1500p that is formed at one end of the slot die units 1100, 1200 and through which the slurry having flowed into the land part 1500 is discharged to the outside. Here, the discharge port 1500p may be formed between a first protrusion 1100p formed at the end of the first die block 1100 and a second protrusion 1200p formed at the end of the second die block 1200. In other words, the discharge port 1500p is formed by the coupling of the first protrusion 1100p and the second protrusion 1200p, and the land part 1500 may be a lip-shaped portion formed at the end. That is, the slurry having flowed into the slot die units 1100, 1200 may be discharged to the current collector E, which is an external substrate, through the discharge port 1500p. Here, the discharge port 1500p may also be referred to as a 'die lip' or 'lip land'.

Here, the land part 1500 may refer to a space from one end of the manifold part 1400 described later to the discharge port 1500p among the spaces separated between the first die block 1100 and the second die block 1200. That is, the length of the land part 1500 may correspond to the length from one end of the manifold part 1400 to the discharge port 1500p.

In addition, the slot die coating device 1000 according to the present embodiment may further include a manifold part 1400 that is formed in at least one of the first die block 1100 and the second die block 1200 and receives the slurry. Here, the manifold part 1400 is configured to temporarily receive slurry having flowed into the slot die units 1100, 1200 and may be referred to as a 'receiving part' or a 'chamber'. As shown in FIG. 3, the manifold part 1400 may be located in front of the loading amount adjustment unit 1600 described later on the basis of the flow direction of the slurry.

The manifold part 1400 may be formed such that one of the surfaces of the first die block 1100 or the second die block 1200 facing each other is recessed. The manifold part 1400 may be formed in the form of a groove having a predetermined depth. As an example, as shown in FIG. 3, the manifold part 1400 is formed on one surface of the second die block 1200 facing the first die block 1100, and the manifold part 1400 may be concavely formed from one surface of the second die block 1200 in a direction away from the first die block 1100. However, the position of the manifold part 1400 is not limited to that shown in FIG. 3, and as described above, a case in which the manifold part 1400 is located in the first die block 1100 may also be included in the present embodiment.

The manifold part 1400 may be formed with a structure for widely distributing the slurry having flowed into the slot die units 1100, 1200 in the width direction (x-axis direction). For example, the manifold part 1400 may be provided in a form that spreads widely along the width direction (x-axis direction) inside the first die block 1100 and the second die block 1200.

Therefore, in the slot die coating device 1000 according to the present embodiment, the manifold part 1400 forms a stagnant region of the slurry inside the slot die units 1100, 1200, which allows the slurry to flow smoothly to the land part 1500.

In this manner, in the slot die coating device 1000 according to the present embodiment, the slurry having flowed into the slot die units 1100, 1200 may flow along the manifold part 1400, the land part 1500, and the discharge port 1500p. Here, the flow path along which the slurry having flowed between the first die block 1100 and the second die block 1200 flows can mean the path along which the slurry flows in the order of the manifold part 1400, the land part 1500, and the discharge port 1500p.

Referring to FIG. 3, the slot die coating device 1000 according to the present embodiment includes a loading amount adjustment unit 1600 that is located on at least one of the first die block 1100 and the second die block 1200 and adjusts the width of the flow path. More specifically, the loading amount adjustment unit 1600 may be formed at a position facing at least one of the upper and lower parts of the land part 1500.

More specifically, the loading amount adjustment unit 1600 can penetrate at least one of the first die block 1100 and the second die block 1200, and the space between the loading amount adjustment unit 1600 and the first die block 1100, and between the loading amount adjustment unit 1600 and the second die block 1200 may be sealed. In other words, the slurry flowing between the first die block 1100 and the second die block 1200 may not leak between the loading amount adjustment unit 1600 and the first die block 1100, and between the loading amount adjustment unit 1600 and the second die block 1200.

As an example, as shown in FIG. 3, the loading amount adjustment unit 1600 may be formed on one surface of the second die block 1200 that faces the first die block 1100. Here, the loading amount adjustment unit 1600 may be located above the land part 1500 while being located on the second die block 1200. However, the position of the loading amount adjustment unit 1600 is not limited thereto, and unlike FIG. 3, a case in which it is located below the land part 1500 while being located on the first die block 1100 may also be included in the present embodiment.

More specifically, the loading amount adjustment unit 1600 includes: a shape change unit 1610 that faces the flow path, a pressing unit 1650 that adjusts a pressure applied to the shape change unit 1610 to change the shape of the shape change unit 1610, and a connecting unit 1630 that connects the pressing unit 1650 and the shape change unit 1610. At this time, the space between the shape change unit 1610 and the connecting unit 1630 and between the pressing unit 1650 and the connecting unit 1630 may have a completely sealed structure.

As an example, the shape change unit 1610 may be made of a rubber material. That is, the shape change unit 1610 may have a structure that is connected to one end and the outer surface of the connecting unit 1630 in the form of a rubber stopper as shown in FIGS. 3 and 4. However, the material of the shape change unit 1610 is not limited thereto, and can be included in the present embodiment as long as it is a material having high restorative force and chemical resistance but having no air permeability.

Therefore, in the slot die coating device 1000 according to the present embodiment, the shape change unit 1610 has an advantage that, while it does not react to the slurry having flowed into the slot die units 1100, 1200, it changes its shape as the pressure applied through the pressing unit 1650 increases, and also may return to its original state as the pressure decreases.

In addition, in order to measure the pressure applied to the shape change unit 1610, at least one pressure sensor may be attached to the inside of the loading amount adjustment unit 1600. More specifically, the pressure sensor may be located inside the connecting unit 1630 and sense the pressure applied by the pressing unit 1650 to the shape change unit 1610. That is, the next setting pressure value of the pressing unit 1650 for changing the shape of the shape change unit 1610 can be set based on the pressure information sensed from the pressure sensor.

Therefore, in the slot die coating device 1000 according to the present embodiment, the pressure applied to the shape change unit 1610 can be measured in real time through the pressure sensor, thereby realizing improved precision and automated control of the loading amount adjustment unit 1600.

Referring to FIGS. 3 and 4, the pressing unit 1650 is a pneumatic control device that is located inside the connecting unit 1630 and provides air pressure to the shape change unit 1610, and the shape of the shape change unit 1610 can be changed into a concave or convex shape depending on the magnitude of the air pressure. As an example, the pressing unit 1650 may be a device that performs air injection and discharge, such as an air hose.

More specifically, as shown in FIG. 4(a), the pressing unit 1650 may flow air into the connecting unit 1630, the pressure inside the connecting unit 1630 may be relatively increased, and the shape change unit 1610 may be changed into a convex shape. On the contrary, as shown in FIG. 4(b), the pressing unit 1650 can discharge air inside the connecting unit 1630 to the outside, so that the pressure inside the connecting unit 1630 becomes relatively low, and the shape change unit 1610 may be changed into a concave shape. That is, the loading amount adjustment unit 1600 according to the present embodiment includes the pressing unit 1650, which is a pneumatic control device, and thus can control the shape change unit 1610 in a non-contact manner.

Therefore, in the slot die coating device 1000 according to the present embodiment, the loading amount adjustment unit 1600 can adjust the discharge amount of slurry flowing in the flow path inside the slot die units 1100, 1200 as the shape of the shape change unit 1610 changes according to the magnitude of the pressure applied through the pressing unit 1650. That is, the height of the land part 1500 can be different through the convex or concave shape of the shape change unit 1610, so that the discharge amount of the slurry discharged through the discharge port 1500p can be adjusted, thereby effectively improving the loading deviation.

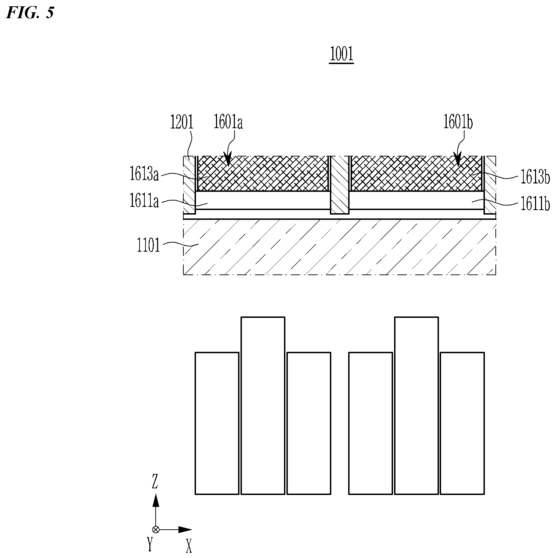

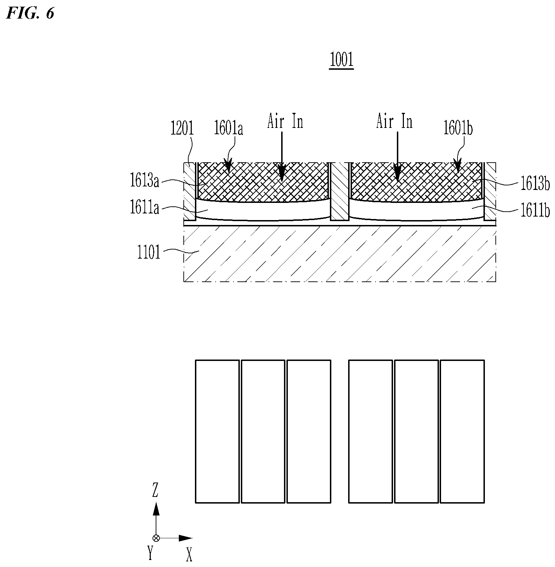

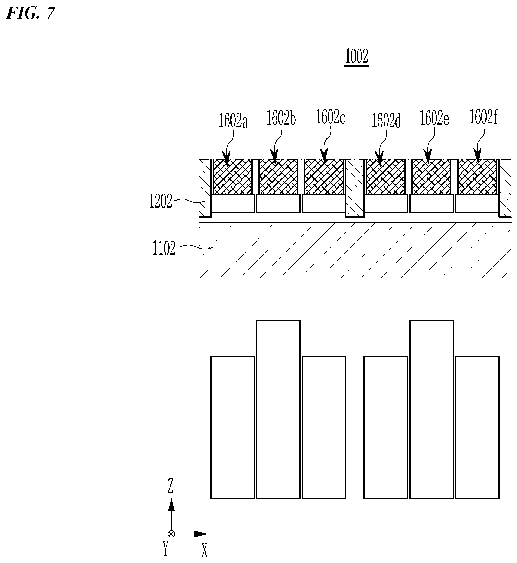

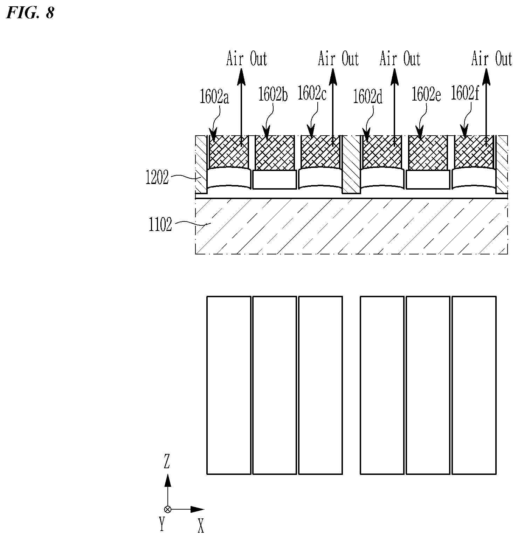

FIGS. 5 and 6 are cross-sectional views of the slot die coating device of FIG. 3 taken along the a-a' axis, which illustrates a loading adjustment method of the loading amount adjustment unit. FIGS. 7 and 8 are cross-sectional views of a slot die coating device according to another embodiment of the present disclosure taken along the same axis as FIGS. 5 and 6, which illustrates a loading adjustment method of the loading amount adjustment unit.

As shown in FIGS. 5 to 8, the slot die coating devices 1001, 1002 according to the present embodiment can be described in mostly the same manner as the slot die coating device 1000 according to FIGS. 3 and 4 described above, and only the aspects different from the aforementioned contents of the loading amount adjustment units 1601, 1602 will be further described.

More specifically, the slot die coating devices 1001, 1002 according to the present embodiment may each include a plurality of loading amount adjustment units 1601, 1602. However, the number of loading amount adjustment units 1601, 1602 is not limited to those shown in FIGS. 5 to 8, and may be appropriately adjusted according to the width and/or coating amount of the current collector E. Here, as shown in FIGS. 5 to 8, some of the second die blocks 1201, 1202 may be inserted into the central part of the plurality of loading amount adjustment units 1601, 1602, but not limited thereto, and a configuration having no second die blocks 1201, 1202 in the central part of the plurality of loading amount adjustment units 1601, 1602 may also be included in the present embodiment.

As an example, as shown in FIGS. 5 and 6, the loading amount adjustment unit 1601 includes a first loading amount adjustment unit 1601a and a second loading amount adjustment unit 1601b, wherein the first loading amount adjustment unit 1601a and the second loading amount adjustment unit 1601b may be aligned along the width direction (+/x-axis direction) of the current collector E. Here, the first loading amount adjustment unit 1601a and the second loading amount adjustment unit 1602b may be operated individually from each other.

As shown in FIG. 5, in the slot die coating device 1001 according to the present embodiment, the loading amount at each position corresponding to the first loading amount adjustment unit 1601a and the second loading amount adjustment unit 1601b may correspond to the size of the lower bar. Referring to FIG. 5, it can be confirmed that the loading amount at each position corresponding to the central part of the first loading amount adjustment unit 1601a and the second loading amount adjustment unit 1601b is relatively large compared to other parts.

At this time, as shown in FIG. 6, in the slot die coating device 1001 according to the present embodiment, the first loading amount adjustment unit 1601a and the second loading amount adjustment unit 1601b may inject air into the first connecting unit 1631a and the second connecting unit 1631b, respectively, and the first shape change unit 1611a and the second shape change unit 1611b can have a convex shape. In this case, unlike FIG. 5, it can be confirmed that, as the loading amount at each position corresponding to the central part of the first loading amount adjustment unit 1601a and the second loading amount adjustment unit 1601b is relatively reduced, the loading amount in the width direction of the slot die units 1101, 1201 becomes equal to each other.

As another example, as shown in FIGS. 7 and 8, the loading amount adjustment unit 1602 includes a first loading amount adjustment unit 1602a, a second loading amount adjustment unit 1602b, a third loading amount adjustment unit 1602c, a fourth loading amount adjustment unit 1602d, a fifth loading amount adjustment unit 1602e, and a sixth loading amount adjustment unit 1602f, wherein the first loading amount adjustment unit 1602a, the second loading amount adjustment unit 1602b, the third loading amount adjustment unit 1602c, the fourth loading amount adjustment unit 1602d, the fifth loading amount adjustment unit 1602e, and the sixth loading amount adjustment unit 1602f may be aligned along the width direction (+/- x-axis direction) of the current collector E. Here, the first loading amount adjustment unit 1602a, the second loading amount adjustment unit 1602b, the third loading amount adjustment unit 1602c, the fourth loading amount adjustment unit 1602d, the fifth loading amount adjustment unit 1602e, and the sixth loading amount adjustment unit 1602f can be operated individually from each other.

As shown in FIG. 7, in the slot die coating device 1002 according to the present embodiment, the loading amounts of the positions corresponding to each of the first loading amount adjustment unit 1602a, the second loading amount adjustment unit 1602b, the third loading amount adjustment unit 1602c, the fourth loading amount adjustment unit 1602d, the fifth loading amount adjustment unit 1602e, and the sixth loading amount adjustment unit 1602f may correspond to the size of the lower bar. Referring to FIG. 7, it can be confirmed that the loading amounts of the positions corresponding to each of the first loading amount adjustment unit 1602a, the third loading amount adjustment unit 1602c, the fourth loading amount adjustment unit 1602d, and the sixth loading amount adjustment unit 1602f are relatively smaller than the other parts.

At this time, as shown in FIG. 8, in the slot die coating device 1001 according to the present embodiment, the first loading amount adjustment unit 1602a, the third loading amount adjustment unit 1602c, the fourth loading amount adjustment unit 1602d, and the sixth loading amount adjustment unit 1602f can discharge air inside each connecting unit to the outside, and the shape change units of the first loading amount adjustment unit 1602a, the third loading amount adjustment unit 1602c, the fourth loading amount adjustment unit 1602d, and the sixth loading amount adjustment unit 1602f may each have a concave shape. In this case, unlike FIG. 7, it can be confirmed that, as the loading amounts of the positions corresponding to each of the first loading amount adjustment unit 1602a, the third loading amount adjustment unit 1602c, the fourth loading amount adjustment unit 1602d, and the sixth loading amount adjustment unit 1602f increase relatively, the loading amounts in the width direction of the slot die units 1102, 1202 become equal to each other.

Therefore, in the slot die coating devices 1001, 1002 according to the present embodiment, the number of loading amount adjustment units 1601, 1602 may be appropriately adjusted as needed. In particular, the slot die coating devices 1001, 1002 according to the present embodiment has the advantage that the greater the number of loading amount adjusting units 1601, 1602, the more locally the loading amount in the width direction of the slot die units 1101, 1102, 1201, 1202 can be controlled, and more effectively the loading deviation can be improved.

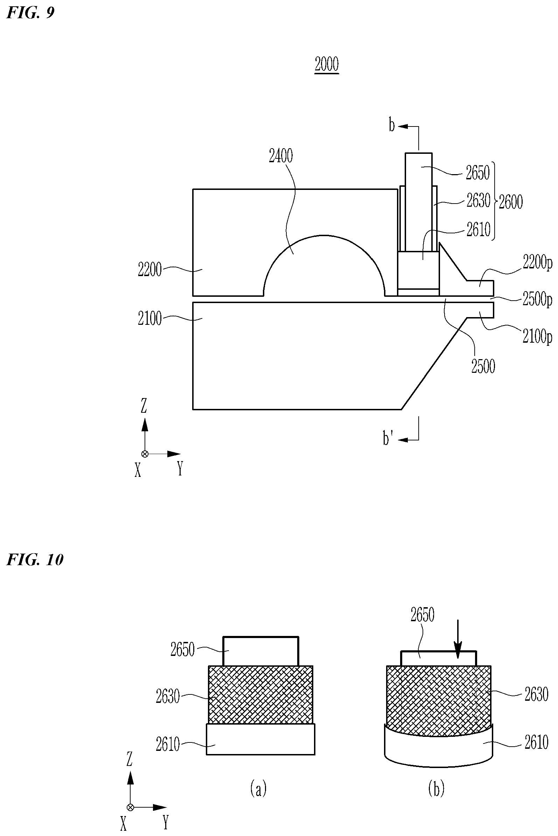

FIG. 9 is a cross-sectional view of a slot die coating device according to another embodiment of the present disclosure. FIG. 10 is a cross-sectional view of a loading amount adjustment unit included in the slot die coating device of FIG. 9.

Referring to FIGS. 9 and 10, the slot die coating device 2000 according to the present embodiment can be described in mostly the same manner as the aforementioned FIGS. 3 to 8, but only the aspects different from the aforementioned contents in the loading amount adjustment unit 2600 will be further described.

Referring to FIGS. 9 and 10, the pressing unit 2650 may be a contact-type control device that is located inside the connecting unit 2630 and provides physical pressure to the shape change unit 2610. As an example, the pressing unit 2650 may be a bar member connected to a driving means such as an electric motor. That is, the pressing unit 2650 may be a bar member that moves in an up-and-down direction by power transmitted through a driving means such as an electric motor. Here, the up-and-down direction may mean a direction toward the top or bottom on the basis of the bottom surface of the shape change unit 2610.

Here, the magnitude of the contact pressure applied to the shape change unit 2610 may be determined according to the degree to which the pressing unit 2650 moves in the up-down direction. That is, the greater the degree to which the pressing unit 2650 moves downward, the greater the magnitude of the contact pressure applied to the shape change unit 2610, and the greater the degree of convexity of the shape change unit 2610. In contrast, the greater the degree to which the pressing unit 2650 moves upward, the smaller the magnitude of the physical pressure applied to the shape change unit 2610, and the smaller the degree of convexity of the shape change unit 2610.

More specifically, as shown in FIG. 10(a), when the pressing unit 2650 hardly moves downward, the shape of the shape change unit 2610 may hardly change. In contrast, as shown in FIG. 4(b), as the pressing unit 2650 moves downward, the shape change unit 2610 may be changed into a concave shape. That is, the loading amount adjustment unit 2600 according to the present embodiment includes the pressing unit 1650, which is a physical control device, so that the shape change unit 1610 may be controlled in a contact manner.

Therefore, in the slot die coating device 2000 according to the present embodiment, as the shape of the shape change unit 1610 changes according to the magnitude of the contact pressure applied by the loading amount adjustment unit 2600 through the pressing unit 2650, the discharge amount of the slurry flowing in the flow path inside the slot die units 2100, 2200 can be controlled. That is, by means of the convex or concave shape of the shape change unit 2610, the height of the land part 2500 may be different, and the amount of slurry discharged from the discharge port 2500p can be effectively adjusted.

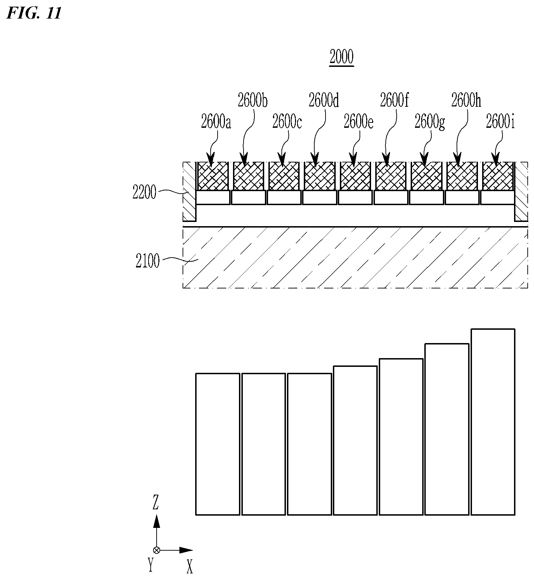

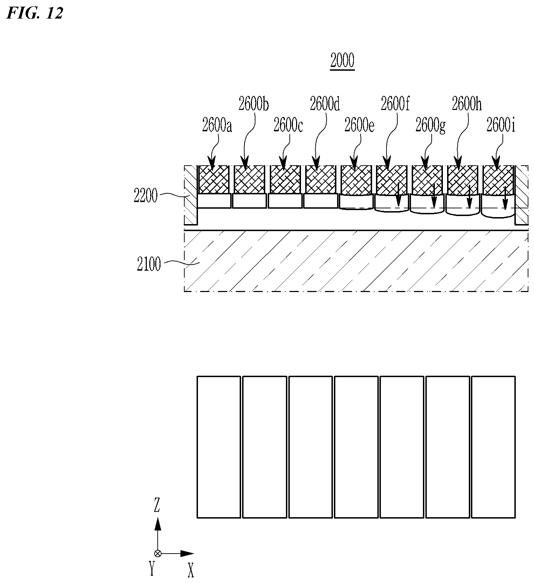

FIGS. 11 and 12 are cross-sectional views of the slot die coating device of FIG. 9 taken along the b-b' axis, which illustrates the loading adjustment method of the loading amount adjustment unit.

As shown in FIG. 11 and FIG. 12, the loading amount adjustment unit 2600 includes a first loading amount adjustment unit 2600a, a second loading amount adjustment unit 2600b, a third loading amount adjustment unit 2600c, a fourth loading amount adjustment unit 2600d, a fifth loading amount adjustment unit 2600e, a sixth loading amount adjustment unit 2600f, a seventh loading amount adjustment unit 2600g, an eighth loading amount adjustment unit 2600f, and a ninth loading amount adjustment unit 2600i, wherein the first loading amount adjustment unit 2600a, the second loading amount adjustment unit 2600b, the third loading amount adjustment unit 2600c, the fourth loading amount adjustment unit 2600d, the fifth loading amount adjustment unit 2600e, the sixth loading amount adjustment unit 2600f, the seventh loading amount adjustment unit 2600g, the eighth loading amount adjustment unit 2600f and the ninth loading amount adjustment unit 2600i may be aligned along the width direction (+/- x-axis direction) of the current collector E.

Here, the first loading amount adjustment unit 2600a, the second loading amount adjustment unit 2600b, the third loading amount adjustment unit 2600c, the fourth loading amount adjustment unit 2600d, the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i can be operated individually from each other.

However, the structure is not limited thereto, and a structure in which a loading amount adjustment unit 2600 arranges a plurality of pressing units 2650 in one shape change unit 2610 unlike FIGS. 11 and 12 can also be included in the present embodiment.

As shown in FIG. 11, in the slot die coating device 2000 according to the present embodiment, the loading amounts at the positions corresponding to each of the first loading amount adjustment unit 2600a, the second loading amount adjustment unit 2600b, the third loading amount adjustment unit 2600c, the fourth loading amount adjustment unit 2600d, the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i may correspond to the size of the lower bar. Referring to FIG. 11, it can be confirmed that the loading amount gradually increases in the order of the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i compared to the other positions.

At this time, as shown in FIG. 12, in the slot die coating device 2000 according to the present embodiment, the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i can each have their pressing units 2650 move downward, wherein the shape change units 2610 of the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i can change into a convex shape. Here, as the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i proceed in order, the magnitude of the contact pressure applied by the pressing unit 2650 in the downward direction may gradually increase, and the degree of convexity of the shape change unit 2610 may also gradually increase.

In this case, unlike FIG. 11, it can be confirmed that as the loading amounts of the positions corresponding to each of the fifth loading amount adjustment unit 2600e, the sixth loading amount adjustment unit 2600f, the seventh loading amount adjustment unit 2600g, the eighth loading amount adjustment unit 2600f, and the ninth loading amount adjustment unit 2600i are relatively reduced, the loading amounts in the width direction of the slot die units 2100, 2200 become equal to each other.

Therefore, in the slot die coating device 2000 according to the present embodiment, the number of loading amount adjustment unit 2600 can be appropriately adjusted as needed. In particular, the slot die coating device 2000 according to the present embodiment has an advantage that the more the number of loading amount adjustment unit 2600, the more locally the loading amount can be controlled in the width direction of the slot die units 2100, 2200, and the more effectively the loading deviation can be improved.

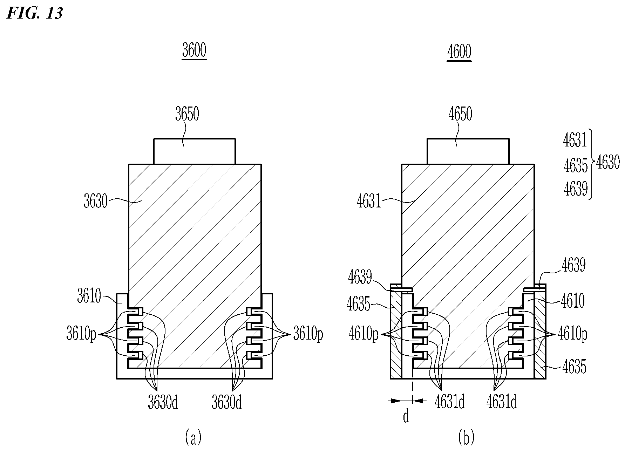

FIG. 13 is a cross-sectional view of the loading amount adjustment unit included in the slot die coating device according to another embodiment of the present disclosure.

Referring to FIG. 13, the loading amount adjustment units 3600, 4600 according to the present embodiment can be applied to the slot die coating devices 1000, 2000 according to FIGS. 1 to 12 previously described, and only the aspects different from the contents described above in the loading amount adjustment units 1600, 2600 of FIGS. 1 to 12 will be further described.

Referring to FIG. 13, the loading amount adjustment units 3600, 4600 according to the present embodiment includes a shape change units 3610, 4610, pressing units 3650, 4650, and connecting units 3630, 4630 that connect the pressing units 3650, 4650 and the shape change units 3610, 4610, similar to the loading amount adjustment units 1600, 2600 described above in FIGS. 1 to 12.

Referring to FIG. 13(a), in the loading amount adjustment unit 3600, the connecting unit 3630 may include at least one groove 3630d on the outer surface that abuts against the shape change unit 3610. In addition, the shape change unit 3610 may include at least one protrusion 3610p on its inner surface that abuts against the connecting unit 3630. Here, at least one groove 3630d and at least one protrusion 3610p may be fitted to each other. Therefore, the loading amount adjustment unit 3600 according to FIG. 13(a) can further strengthen the adhesion and binding force between the shape change unit 3610 and the connecting unit 3630, thereby preventing the coupling between the shape change unit 3610 and the connecting unit 3630 from being released due to the pressure applied by the pressing unit 3650 to the shape change unit 3610.

Referring to FIG. 13(b), even in the case of the loading amount adjustment unit 4600, the connecting unit 4630 may include at least one groove 4631d on the outer surface that abuts against the shape change unit 4610. In addition, the shape change unit 4610 may include at least one protrusion 4610p on the inner surface that abouts against the connecting unit 4630. Here, at least one groove 4631d and at least one protrusion 4610p may be fitted to each other.

In addition, in the loading amount adjustment unit 4600, the outer diameter of one end of the connecting unit 4630 may be relatively smaller than the outer diameter of the center part and/or the other end of the connecting unit 4630. As an example, as shown in FIG. 13(b), the outer diameter of one end of the connecting unit 4630 may be relatively smaller than the outer diameter of the central part and/or other end part of the connecting unit 4630 by a magnitude equal to or larger than the thickness d of the shape change unit 4610.

In addition, the connecting unit 4630 may include a connecting central part 4631, a connecting auxiliary part 4635 coupled to the outer surface of the connecting central part 4631, and a connecting bolt part 4639 that couples the connecting central part 4631 and the connection auxiliary part 4635 to each other. As an example, the connecting bolt part 4639 may couple the connecting central part 4631 and the connecting auxiliary part 4635 to each other by bolting.

Here, the connecting auxiliary part 4635 and the connecting bolt part 4639 may be located at one end of the connecting central part 4631. More specifically, the connecting auxiliary part 4635 may be extended along the outer surface of the shape change unit 4610 arranged at one end of the connecting central part 4631.

Therefore, the loading amount adjustment unit 4600 according to FIG. 13(b) can further strengthen the adhesion and binding force between the shape change unit 3610 and the connecting unit 3630 due to the frictional force between the connecting auxiliary part 4635 and the shape change unit 4610 along with the fitting connection between the shape change unit 4610 and the connecting unit 4630, and can more effectively prevent the coupling between the shape change unit 3610 and the connecting unit 3630 from being released.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

1000, 2000: slot die coating device
1100, 2100: first die block
1200, 2200: second die block
1400, 2400: manifold part
1500, 2500: land part
1600, 2600, 3600, 4600: loading amount adjustment unit

## Claims

1. A slot die coating device that discharges a slurry onto a current collector to form a coating layer, the device comprising:
a slot die unit that includes a first die block and a second die block located on the first die block, and includes a flow path through which a slurry having flowed between the first die block and the second die block flows; and
a loading amount adjustment unit that is located on at least one of the first die block and the second die block, and adjusts the width of the flow path,
wherein the loading amount adjustment unit comprises:
a shape change unit that faces the flow path,
a pressing unit that adjusts a pressure applied to the shape change unit to change the shape of the shape change unit, and
a connecting unit that connects the pressing unit and the shape change unit.

2. The slot die coating device according to claim 1, wherein:
the shape change unit is made of a rubber material.

3. The slot die coating device according to claim 2, wherein:
at least one pressure sensor is attached to the shape change unit.

4. The slot die coating device according to claim 2, wherein:
the pressing unit is a pneumatic control device that provides air pressure to the shape change unit, and
the shape of the shape change unit changes into a concave or convex shape in accordance with the magnitude of the air pressure.

5. The slot die coating device according to claim 2, wherein:
the pressing unit is a contact-type control device that provides physical pressure to the shape change unit as a bar member connected to an electric motor moves in an up-and-down direction, and
the degree of convexity of the shape change unit changes in accordance with the magnitude of the physical pressure.

6. The slot die coating device according to claim 1, wherein:
the loading amount adjustment unit penetrates at least one of the first die block and the second die block, and
the space between that loading amount adjustment unit and the first die block, and between the loading amount adjustment unit and the second die block are sealed.

7. The slot die coating device according to claim 6, wherein:
the loading amount adjustment unit is formed on one surface of the second die block that faces the first die block.

8. The slot die coating device according to claim 1, wherein:
the loading amount adjustment unit comprises a first loading amount adjustment unit and a second loading amount adjustment unit,
the first loading amount adjustment unit and the second loading amount adjustment unit are aligned along a width direction of the current collector, and
the first loading amount adjustment unit and the second loading amount adjustment unit can operate independently from each other.

9. The slot die coating device according to claim 1,
further comprising a land part that is formed between the first die block and the second die block facing each other, and discharges the slurry having flowed into the flow path in a direction toward the current collector,
wherein the loading amount adjustment unit is formed at a position facing at least one of the upper and lower parts of the land part.

10. The slot die coating device according to claim 9,
further comprising a discharge port formed at one end of the slot die unit, through which a slurry flowing in the land part is discharged to the outside.

11. The slot die coating device according to claim 1,
further comprising a manifold part that is formed in at least one of the first die block and the second die block and receives a slurry,
wherein the manifold part is located in front of the loading amount adjustment unit on the basis of the flow direction of the slurry.

12. The slot die coating device according to claim 11,
the manifold part is formed on one surface of the second die block that faces the first die block, and
the manifold part is concavely formed from one surface of the second die block in a direction away from the first die block.

13. The slot die coating device according to claim 1, wherein in the loading amount adjustment unit,
the connecting unit further comprises at least one groove on the outer surface that abuts against the shape change unit,
the shape change unit further comprises at least one protrusion on the inner surface that abuts against the connecting unit, and
the at least one groove and the at least one protrusion are fitted to each other.

14. The slot die coating device according to claim 1, wherein:
in the loading amount adjustment unit, the outer diameter of one end of the connecting unit is smaller by the magnitude equal to or greater than the thickness of the shape change unit compared to the outer diameters of the central part and the other end of the connecting unit.

15. The slot die coating device according to claim 14, wherein:
the connecting unit comprises a connecting central part, a connecting auxiliary part coupled to an outer surface of the connecting central part, and a connecting bolt part that couples the connecting central part and the connecting auxiliary part to each other,
the connecting auxiliary part extends along an outer surface of the shape change unit disposed at one end of the connecting central part, and
the connecting bolt part couples the connecting central part and the connecting auxiliary part to each other by bolting.
